# EUROPÄISCHE PATENTSCHRIFT

(11) **EP 1 989 053 B1**
(45) Veröffentlichungstag und Bekanntmachung des Hinweises auf die Patenterteilung: **23.10.2013**
(21) Anmeldenummer: 07703514.5
(22) Anmeldetag: 17.02.2007
(51) Int. Cl.: B41F 13/21, B41F 33/00, F16C 13/02, F16C 19/52, F16C 35/077

(54) **LAGERANORDNUNG MIT MINDESTENS EINEM DREI- ODER MEHRRINGLAGER UND VERFAHREN ZUR ÜBERWACHUNG EINER SOLCHEN LAGERANORDNUNG**
BEARING ARRANGEMENT HAVING AT LEAST ONE BEARING HAVING THREE OR MORE RINGS, AND METHOD FOR MONITORING A BEARING ARRANGEMENT OF THIS TYPE
SYSTEME DE PALIER QUI PRESENTE AUX MOINS UN PALIER A TROIS BAGUES OU PLUS ET PROCEDE DE SURVEILLANCE D'UN TEL SYSTEME DE PALIER

(30) Priorität: 22.02.2006 DE 102006008176
(43) Veröffentlichungstag der Anmeldung: 12.11.2008
(73) Patentinhaber: AB SKF, 415 03 Göteborg (SE)
(72) Erfinder: SCHWEITZER, Andreas, A-3352 St. Peter/Au (AT); URBAN, Andreas, A-4400 Steyr (AT); LULEK, Andreas, A-4431 Heidershofen (AT); KRAUS, Andreas, 97453 Schonungen (DE)
(74) Vertreter: Kohl, Thomas
(86) Internationale Anmeldenummer: PCT/EP2007/001388
(87) Internationale Veröffentlichungsnummer: WO 2007/096104

(56) Entgegenhaltungen:
- EP-A- 0 783 964
- EP-A1- 0 527 405
- EP-A2- 1 398 636
- DE-A1- 3 324 811
- DE-A1- 10 021 233

## Beschreibung

Die Erfindung betrifft eine Lageranordnung mit mindestens einem Drei- oder Mehrringlager, insbesondere zur Lagerung einer Druckwalze in einer Druckmaschine, wobei das Drei- oder Mehrringlager mindestens einen sich bei bestimmungsgemäßem Gebrauch drehenden Innenring, mindestens einen Mittelring und mindestens einen Außenring aufweist, wobei der Außenring in einem Gehäuse angeordnet ist und wobei die Lageranordnung mit mindestens einem Sensor zur Messung mindestens eines Betriebsparameters der Lageranordnung ausgestattet ist. Des weiteren betrifft die Erfindung ein Verfahren zur Überwachung einer solchen Lageranordnung.

Insbesondere bei Druckmaschinen werden Drei- oder Mehrringlager eingesetzt, die für das exakte Lagern einer Druckwalze mit entsprechender Einstellmöglichkeit erforderlich sind. Die Lageranordnungen werden dabei zumeist vormontiert und als Einheiten an die Druckmaschine geliefert, wo sie eingebaut werden.

Dabei stellt sich die Problematik, dass es für den Betreiber der Druckmaschine relativ aufwändig bzw. sogar unmöglich ist festzustellen, wie der Status der Lageranordnung nach dem Transport und der Montage bzw. im Betrieb ist. Gerade diese Information ist jedoch sehr wichtig, um langfristig optimale Betriebsbedingungen aufrechtzuerhalten und um eine hochpräzise Lagerung der Druckwalze sicherzustellen.

Insbesondere kommt der erforderlichen Lagervorspannung eine große Bedeutung zu, da nur mit hinreichender, jedoch nicht zu großer Lagervorspannung die Lageraufgabe zuverlässig gelöst werden kann; bei zu hoher Vorspannung wird die Gebrauchsdauer der Lageranordnung herabgesetzt. In diesem Zusammenhang spielt es auch eine Rolle, dass die Lageranordnung nicht zu wenig, jedoch auch nicht zu stark nachgeschmiert, d. h. mit Schmierstoff versorgt wird.

Die EP 0 527 405 A1 offenbart ein Dreiringwälzlager für den Zapfen der Zylinder von Druckmaschinen. Zwischen den drei Lagerringen sind Wälzkörperreihen angeordnet.

Die DE 103 27 218 A1 offenbart einen elektromotorischen Direktantrieb für einen Zylinder einer Druckmaschine mit einer Messvorrichtung zum Ermitteln des Drehwinkels. Die gezeigte Vorrichtung umfasst einen als separates Bauteil ausgebildeten Messring. Dem Messring gegenüber ist ein Sensor angeordnet, der in einem Lagergehäuse platziert ist, in dem der Außenring des Wälzlagers eingebaut ist.

Aus der EP 0 754 548 B1 ist eine Lageranordnung für einen Druckmaschinenzylinder bekannt, insbesondere für eine Offset-Druckmaschine mit beidseitig in einem An- und Abstellexzenter gelagerten Zylinderzapfen. Dabei ist zwischen der Lagerung und einer die Lagerung aufnehmenden Bohrung eines Maschinengestells ein Ringspalt vorhanden, an dem ein Sensor angeordnet ist, der über eine Maschinensteuerung zur Messung von Lagerspiel, Betriebstemperatur und Relativbewegungen des Außenlagers ein Druckelement der Lagerung aktiviert bzw. stillsetzt.

Weiterhin ist aus der DE 199 47 458 A1 ein Verfahren zur Schmierung eines Wälzlagers bekannt, dem von einem zugeordneten Schmierstoffgeber Schmierstoff zugeführt wird. Dabei bedient man sich einer dem Wälzlager zugeordneten Messeinrichtung zur Erfassung des Lagerzustandes, die mit einer Steuereinrichtung des Schmierstoffgebers verbunden ist, wobei sich als Messeinrichtung beispielsweise eine Temperaturmesseinrichtung am Wälzlager und/oder eine Einrichtung zur Messung der Laufruhe des Wälzlagers eignet. Wenn dann ein Messsignal einen Vorgabewert; der für einen beginnenden Lagerschaden charakteristisch ist, überschreitet, wird die Schmierstoffabgaberate durch Änderung der Spendezeitpunkte und/oder der Dauer der Spendeintervalle erhöht.

Schließlich ist beispielsweise aus der EP 1 398 636 A2 eine Lageranordnung bekannt, bei der in einem gemeinsamen Gehäuse ein Geschwindigkeitssensor, ein Temperatursensor und ein Beschleunigungssensor angeordnet sind, die allesamt mit einem lokalen Mikroprozessor verbunden sein können, der beispielsweise für die Rohsignale des Beschleunigungssensors eine Bandpassfunktionalität realisiert und die von da aus mittels elektromagnetischer Wellen zu einer entfernten Auswerteeinheit übertragen werden.

Für Lageranordnungen der eingangs genannten Art haben die vorbekannten Lösungen zu keiner durchgreifenden Verbesserung geführt, was durch die spezielle Konzeption von Drei- oder Mehrringlagern bedingt ist.

Der Erfindung liegt daher die **Aufgabe** zu Grunde, eine Lageranordnung der eingangs genannten Art so fortzubilden, dass die genanten Nachteile bzw. Unsicherheiten überwunden werden. Ferner soll ein Verfahren bereit gestellt werden, mit dem eine verbesserte Überwachung und damit ein besserer Betrieb der Lagervorrichtung möglich ist.

Die **Lösung** dieser Aufgabe durch die Erfindung ist durch die Merkmale des Anspruchs 1 und des Anspruchs 12 gekennzeichnet.

Bevorzugt ist dabei vorgesehen, dass die Erfassungseinheit zur Erfassung und Weiterleitung eines von einem Sensor gemessenen Signals eine Fernübertragungs-einheit umfasst.

Für die Ausgestaltung der Sensoren gibt es verschiedene Möglichkeiten: Ein Sensor kann zur Erfassung der Temperatur am Innenring und/oder an einem mit dem Innenring verbundenen Bauteil angeordnet sein. Weiterhin kann ein Erregerelement zur Erfassung der Drehbewegung am Innenring und/oder an einem mit dem Innenring verbundenen Bauteil vorgesehen werden. Ein weiterer Sensor kann zur Erfassung der Drehzahl des Innenrings am Mittelring oder am Außenring angeordnet werden. Zur Erfassung der Temperatur am Mittelring oder am Außenring kann ein weiterer Sensor eingesetzt werden. Ein Sensor kann zur Erfassung der Lagerbelastung bzw. der Lagerkräfte am Mittelring oder am Außenring angeordnet sein; dieser Sensor ist bevorzugt im Hauptlastbereich des Mittelrings angeordnet. Schließlich kann ein Sensor zur Erfassung von Beschleunigungen am Mittelring oder am Außenring angeordnet sein.

Bevorzugt stehen alle Sensoren mit der Erfassungseinheit in Verbindung. Hierfür kann eine Kabelverbindung oder auch eine drahtlose Verbindung vorgesehen werden.

Vorteilhaft ist es weiterhin, wenn die Erfassungseinheit mit Speichermitteln zum Speichern mindestens eines Betriebsparameters der Lageranordnung ausgestattet ist.

Das Verfahren zur Überwachung einer Lageranordnung der genanten Art zeichnet sich erfindungsgemäß durch folgende Schritte aus:
a) Messung der Temperatur am Innenring mit einem ersten Temperatursensor;
b) Messung der Temperatur am Mittelring oder am Außenring mit einem zweiten Temperatursensor;
c) Vergleichen der beiden gemessenen Temperaturen am Innenring und Mittelring bzw. Außenring;
d) Abgabe eines Signals, wenn die ermittelte Temperaturdifferenz einen vorgegebenen Wert übersteigt.

Hiermit ist eine effiziente Überwachung des Lagers einer Druckmaschine möglich. Die Signalabgabe kann wieder drahtlos an eine Steuerungseinheit erfolgen.

Eine bevorzugte Ausgestaltung des Verfahrens sieht vor, dass die Signalabgabe durch Absetzen einer Short Message Service (SMS) an ein Mobiltelefon und/oder an einen E-Mail-Empfänger erfolgt.

Besonders bevorzugt ist vorgesehen, dass die Abgabe eines Signals gemäß obigem Schritt d) erfolgt, wenn die ermittelte Temperaturdifferenz mindestens 10 K, vorzugsweise mindestens 15 K, beträgt. In diesem Falle kann die Abgabe eines Signals gemäß obigem Schritt d) ein Nachschmieren der Lageranordnung auslösen und/oder beeinflussen, wie noch später gesehen werden wird.

Mit der vorgeschlagenen Ausgestaltung einer Lageranordnung sowie mit dem vorgeschlagenen Verfahren wird es möglich, die Funktionstüchtigkeit einer gattungsgemäßen Lagerung insbesondere in einer Druckmaschine verbessert zu überwachen und bei Bedarf zu reagieren, um zum richtigen Zeitpunkt eine Nachschmierung des Lagers zu veranlassen. Damit ist sichergestellt, dass die Gebrauchsdauer der Lageranordnung maximal lang ist, bei gleichzeitiger Sicherstellung einer präzisen Lagerung des zu lagernden Bauteils, insbesondere der Druckwalze einer Druckmaschine.

Gegebenenfalls während des Transports und der Montage der Lageranordnung aufgetretene Unregelmäßigkeiten können leichter erkannt werden, so dass bei Bedarf entsprechend entgegengewirkt werden kann.

In der Zeichnung ist ein Ausführungsbeispiel der Erfindung dargestellt. Es zeigen:
- Figur 1: den Radialschnitt durch eine Lageranordnung zur Lagerung der Druckwalze in einer Druckmaschine und
- Figur 2: eine schematische Darstellung der Erfassungseinheit und der von ihr überwachten Sensoren.

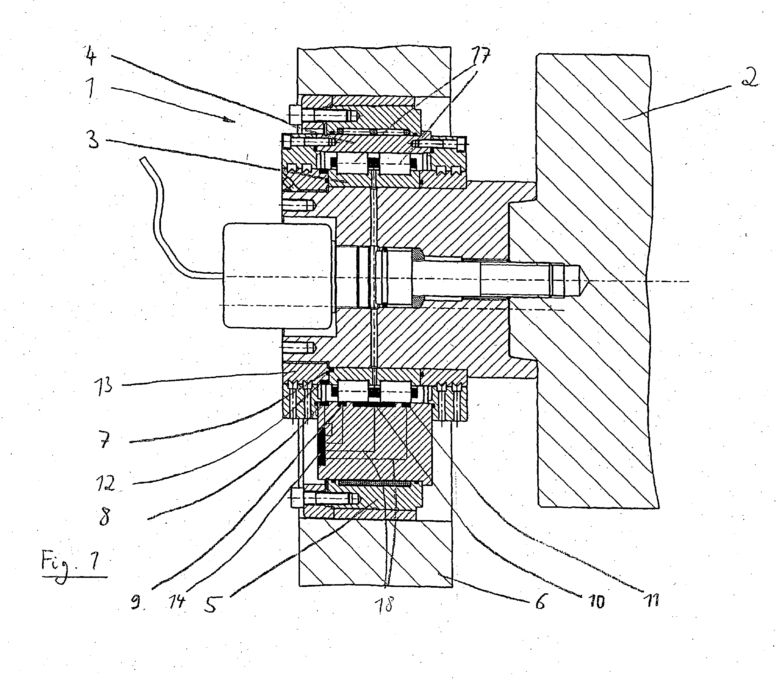

In Fig. 1 ist eine Lageranordnung skizziert, mit der die Druckwalze 2 einer nicht näher dargestellten Druckmaschine gelagert wird. Die Lageranordnung weist ein Dreiringlager 1 auf, die einen Innenring 3 hat, der bei bestimmungsgemäßem Gebrauch zusammen mit der Druckwalze 2 dreht. Weiterhin ist ein Mittelring 4 und ein Außenring 5 vorhanden, wobei eine an sich bekannter Exzentrizität - wie dargestellt - genutzt wird, um die Lageranordnung einstellbar zu machen.

Die Lagerung des Innenrings 3 relativ zum Mittelring 4 erfolgt durch zwei Reihen von Wälzkörpern 17, die als Zylinderrollen ausgebildet sind. Der Außenring 5 ist in einem Gehäuse 6 der Druckmaschine gelagert.

Zur Erfassung diverser Betriebsparameter der Lageranordnung sind mehrere Sensoren 7, 8, 9, 10 und 11 vorgesehen:
Der Sensor 7 ist ein Temperatursensor und an der Stirnseite eines mit dem Innenring 3 verbundenen ringförmigen Bauteils 13 angeordnet, wobei der Innenring 3 und das Bauteil 13 miteinander mittels einer nicht näher dargestellten Schraubverbindung miteinander verbunden sind. Mit dem Sensor 7 kann die Temperatur T₁ des Innehrings 3 bzw. eines an den Innenrings 3 angrenzenden Bereichs gemessen werden.

Mit dem Innenring 3 drehfest verbunden ist ein Erregerelement 12 in Form eines Drehzahlgebers (Geberrad), der einen Sensor 8 in Form eines Drehzahlsensors anregt, so dass vom Sensor 8 die Drehzahl n gemessen werden kann, mit der der Innenring 3 relativ zum Mittelring 4 dreht.

Ein als Temperatursensor 9 ausgebildeter Sensor ist mit dem Mittelring 4 verbunden, so dass über ihn die Temperatur T_{M} des Mittelrings 4 gemessen werden kann.

Ferner ist in der Lastzone des Mittelrings 4 ein Kraftsensor 10 angeordnet, der beispielsweise auf Basis von Dehnmessstreifen (DMS) arbeiten kann. Damit können die Kräfte F gemessen werden, die über den Mittelring 4 übertragen werden und auch ein Maß dafür sind, welche Lagervorspannung im Lager herrscht.

Schließlich ist ein Beschleunigungssensor 11 vorgesehen, der die Beschleunigungen a im Bereich der Laufbahnen des Mittelrings 4 aufnehmen kann, woraus auf die Laufruhe bzw. -unruhe im Lager geschlossen werden kann.

Alle Sensoren 7, 8, 9, 10, 11 stehen mit einer Erfassungseinheit 14 in Verbindung. Die Sensoren 8, 9, 10 und 11 sind dabei wie angedeutet mit Kabeln 18 mit der - Erfassungseinheit 14 verbunden. Indes steht der Sensor 7 über eine drahtlose Verbindung, beispielsweise über eine Funkverbindung, mit der Einheit 14 in Verbindung, was aufgrund des Übergangs vom rotierenden zum nicht-rotierenden Bauteil eine besonders vorteilhafte Maßnahme bildet.

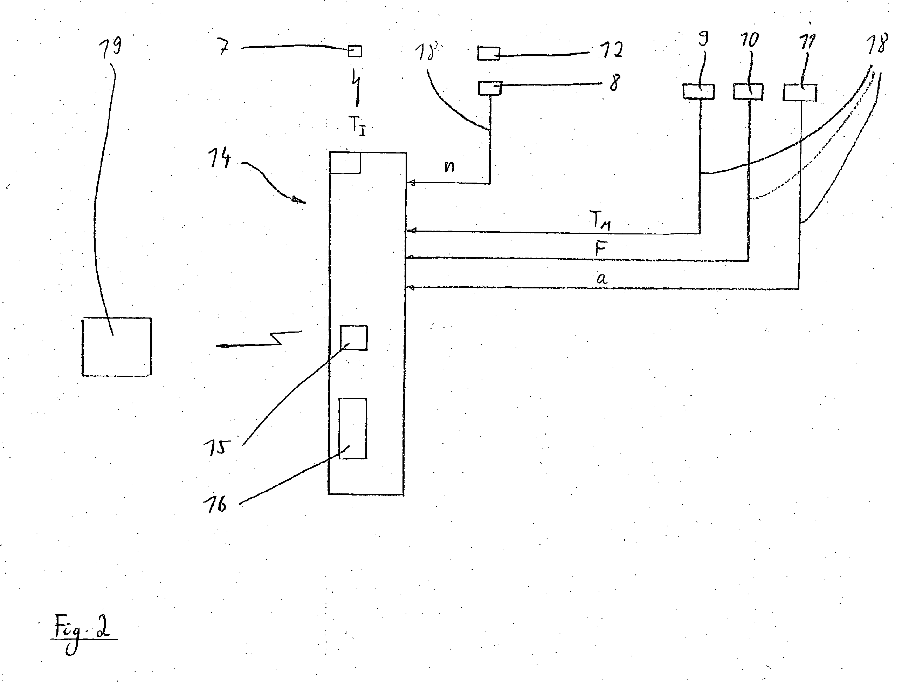

Wie in der schematischen Fig. 2 gesehen werden kann, laufen alle Signale der Sensoren 7, 8, 9, 10 und 11 in der Erfassungseinheit 14 ein, wo sie in geeigneter Weise elektronisch verarbeitet werden können. Dabei erfolgt zumindest eine Vorverarbeitung der Sensordaten.

Die Erfassungseinheit 14 steht wiederum mittels einer Fernübertragungseinheit 15 über eine drahtlose Verbindung mit einer Steuerungseinheit 19 der Druckmaschine in Verbindung, zu der die gemessenen Daten transferiert werden können. Außerdem ist die Erfassungseinheit 14 auch mit einem Speichermittel 16 versehen, das ein Abspeichern gemessener Daten über eine gewisse Zeit erlaubt.

Verfahrensgemäß ist vorgesehen, dass zumindest eine Überwachung derart erfolgt, dass mittels der beiden Temperatursensoren 7 und 9 die jeweiligen Temperaturen T₁ am Innenring 3 und T_{M} am Mittelring 4 (bzw. am Außenring 5) gemessen und der Erfassungseinheit 14 zugeleitet werden. Entweder schon in der Erfassungseinheit 14 oder erst nach der Datenübermittlung an die Steuerungseinheit 19 erfolgt die Differenzbildung zwischen den beiden Temperaturen, also die Ermittlung der Temperaturdifferenz ΔT. Die Temperaturdifferenz ist unter anderem abhängig von der in der Lageranordnung herrschenden Vorspannung, wobei bei zu hoher Vorspannung eine entsprechende Erwärmung auftritt.

Damit bietet die gemessene Temperaturdifferenz - unter Berücksichtigung der Zeit, über die sie stattfindet - einen Indikator für den Lagerzustand. Es ist namentlich ein Rückschluss auf das "verbrauchte" Schmiermittel (Fett) möglich, wenn insbesondere zusätzlich zur Temperaturdifferenz die entsprechende Drehzahl n beobachtet wird. Gegebenenfalls kann daher in Abhängigkeit der gemessenen Werte der Temperaturdifferenz ΔT über der Zeit von der Steuerungseinheit 19 ein Nachschmieren der Lageranordnung veranlasst werden. Beispielsweise kann dann, wenn die Temperaturdifferenz ΔT für eine vorgegebene Zeit über 15 K liegt, ein Nachführen von beispielsweise 3 g Fett in das Lager veranlasst werden, um wieder optimale Schmierbedingungen herzustellen. Hierfür sind sog. "Grease on Board" - Lösungen bekannt, die ein Schmiermittelreservoir für die Nachschmierung der Lageranordnung bereithalten. Bei Bedarf können in den Bewertungsalgorithmus der Steuerungseinheit 19 bzw. der Erfassungseinheit 14 auch die gemessene Drehzahl n sowie die anderen genannten Parameter mit eingehen.

Es ist dabei auch möglich, die entsprechenden Informationen über eine Short Message Service (SMS) an ein Mobiltelefon bzw. an einen E-Mail-Empfänger abzusetzen.

Zusätzlich kann die Erfassungseinheit 14 mit einer Überwachungsfunktion ausgestattet sein, um Informationen über einen Papierwickler für einen gewissen Zeitraum (z. B. für 2 Jahre) in den Speichermitteln 16 zu speichern.

Als weitere Ausgestaltung hat es sich als möglich erwiesen, den Kraftsensor 10 direkt in den Wälzkörpern 17 unterzubringen, wobei dann wieder die drahtlose Datenübertragung in Frage kommt.

Mit dem Vorschlag wird es möglich, verbesserte Zusagen über die Gebrauchsdauer der Lagereinheit geben zu können.

Es sei angemerkt, dass auch bereits die Beobachtung der Temperaturen von Innenring und Mittel- bzw. Außenring hilfreich ist, da sowohl die Absoluttemperaturen als auch die Differenztemperaturen einen Einfluss auf die Lagervorspannung haben und Rückschlüsse ermöglichen.

Der Kraftsensor und/oder der Beschleunigungssensor ermöglicht die Erfassung und ein nachträgliches Auswerten von plötzlich auftretenden Überlasten, die im Zusammenhang mit dem Papierwickler stehen können. Auch hierfür können kritische Grenzwerte vorgegeben und überwacht werden.

### Bezugszeichenliste

- 1: Drei- oder Mehrringlager
- 2: Druckwalze
- 3: Innenring
- 4: Mittelring
- 5: Außenring
- 6: Gehäuse
- 7,8,9, 10,11: Sensor
- 7: Temperatursensor
- 8: Drehzahlsensor
- 9: Temperatursensor
- 10: Kraftsensor
- 11: Beschleunigungssensor
- 12: Erregerelement
- 13: mit dem Innenring verbundenes Bauteil
- 14: Erfassungseinheit
- 15: Fernübertragungseinheit
- 16: Speichermittel
- 17: Wälzkörper
- 18: Kabel
- 19: Steuerungseinheit
- n: Drehzahl
- T₁: Temperatur am Innenring
- T_{M}: Temperatur am Mittelring
- F: Lagerkraft
- a: Beschleunigung
- ΔT: Temperaturdifferenz

## Patentansprüche

1. Lageranordnung mit mindestens einem Drei- oder Mehrringlager (1), wobei das Drei- oder Mehrringlager (1) mindestens einen sich bei bestimmungsgemäßem Gebrauch drehenden Innenring (3), mindestens einen Mittelring (4) und mindestens einen Außenring (5) aufweist, wobei der Außenring (5) in einem Gehäuse (6) angeordnet ist, **dadurch gekennzeichnet, dass** die Lageranordnung mit mindestens zwei Sensoren (7, 8, 9, 10, 11) zur Messung mindestens zweier Betriebsparameter (n, T₁, T_{M}, F, a) der Lageranordnung ausgestattet ist, wobei mindestens ein Sensor (7) und/oder ein Erregerelement (12) am Innenring (3) und/oder an einem mit dem Innenring (3) verbundenen Bauteil (13) angeordnet ist, wobei am Mittelring (4) oder am Außenring (5) eine Erfassungseinheit (14) zur Erfassung und Weiterleitung der von den mindestens zwei Sensoren (7, 8, 9, 10, 11) gemessenen Signale angeordnet ist.

2. Lageranordnung nach Anspruch 1, **dadurch gekennzeichnet, dass** die Erfassungseinheit (14) zur Erfassung und Weiterleitung eines von einem Sensor (7, 8, 9, 10, 11) gemessenen Signals eine Fernübertragungseinheit (15) umfasst.

3. Lageranordnung nach Anspruch 1 oder 2, **dadurch gekennzeichnet, dass** ein Sensor (7) zur Erfassung der Temperatur (T₁) am Innenring (3) und/oder an einem mit dem Innenring (3) verbundenen Bauteil (13) angeordnet ist.

4. Lageranordnung nach Anspruch 1 oder 2, **dadurch gekennzeichnet, dass** ein Erregerelement (12) zur Erfassung der Drehbewegung am Innenring (3) und/oder an einem mit dem Innenring (3) verbundenen Bauteil (13) angeordnet ist.

5. Lageranordnung nach Anspruch 4, **dadurch gekennzeichnet, dass** ein Sensor (8) zur Erfassung der Drehzahl (n) des Innenrings (3) am Mittelring (4) oder am Außenring (5) angeordnet ist.

6. Lageranordnung nach Anspruch 1 oder 2, **dadurch gekennzeichnet, dass** ein Sensor (9) zur Erfassung der Temperatur (T_{M}) am Mittelring (4) oder am Außenring (5) angeordnet ist.

7. Lageranordnung nach Anspruch 1 oder 2, **dadurch gekennzeichnet, dass** ein Sensor (10) zur Erfassung der Lagerbelastung bzw. Lagerkräfte (F) am Mittelring (4) oder am Außenring (5), insbesondere im Hauptlastbereich des Mittelrings (4) angeordnet ist.

8. Lageranordnung, nach Anspruch 1 oder 2, dadurch gekenntzeichnet, dass ein Sensor (11) zur Erfassung von Beschleunigungen (a) am Mittelring (4) oder am Außenring (5) angeordnet ist.

9. Lageranordnung nach einem der Ansprüche 1 bis 8, **dadurch gekennzeichnet, dass** alle Sensoren (7; 8, 9, 10, 11) mit der Erfassungseinheit (14) in Verbindung stehen.

10. Lageranordnung nach Anspruch 9, **dadurch gekennzeichnet, dass** die Verbindung zwischen mindestens einem Sensor (7, 8, 9, 10, 11) und der Erfassungseinheit (14) als Kabelverbindung oder als drahtlose Verbindung ausgebildet ist.

11. Lageranordnung nach einem der Ansprüche 1 bis 10, **dadurch gekennzeichnet, dass** die Erfassungseinheit (14) mit Speichermitteln (16) zum Speichern mindestens eines Betriebsparameters (n, T_{I}, T_{M}, F, a) der Lageranordnung ausgestattet ist.

12. Verfahren zur Überwachung einer Lageranordnung mit mindestens einem Drei- oder Mehrringlager (1), wobei das Drei- oder Mehrringlager (1) mindestens einen sich bei bestimmungsgemäßem Gebrauch drehenden Innenring (3), mindestens einen Mittelring (4) und mindestens einen Außenring (5) aufweist, wobei der Außenring (5) in einem Gehäuse (6) angeordnet ist, **dadurch gekennzeichnet, dass** die Lageranordnung mit mindestens zwei Sensoren (7, 8, 9, 10, 11) zur Messung mindestens zweier Betriebsparameter (n, T_{I}, T_{M}, F, a) der Lageranordnung ausgestattet ist, wobei das Verfahren die Schritte umfasst:
a) Messung der Temperatur (T_{I}) am Innenring (3) mit einem ersten Temperatursensor (7);
b) Messung der Temperatur (T_{M}) am Mittelring (4) oder am Außenring (5) mit einem zweiten Temperatursensor (9);
c) Vergleichen der beiden gemessenen Temperaturen (T_{I}, T_{M}) am Innenring (3) und Mittelring (4) bzw. Außenring (5);
d) Abgabe eines Signals, wenn die ermittelte Temperaturdifferenz (ΔT) einen vorgegebenen Wert übersteigt.

13. Verfahren nach Anspruch 12, **dadurch gekennzeichnet, dass** die Signalabgabe drahtlos, durch Absetzen einer Short Message Service (SMS) an ein Mobiltelefon und/oder an einen E-Mail-Empfänger erfolgt.

14. Verfahren nach Anspruch 12, **dadurch gekennzeichnet, dass** die Abgabe eines Signals gemäß Schritt d) von Anspruch 12 erfolgt, wenn die ermittelte Temperaturdifferenz (ΔT) mindestens 10 K, vorzugsweise mindestens 15 K, beträgt.

15. Verfahren nach einem der Ansprüche 12 bis 14, **dadurch gekennzeichnet, dass** die Abgabe eines Signals gemäß Schritt d) von Anspruch 12 ein Nachschmieren der Lageranordnung auslöst und/oder beeinflusst.

## Claims

1. Bearing arrangement having at least one three-ring or multi-ring bearing (1), the three-ring or multi-ring bearing (1) having at least one inner ring (3) rotating during intended use, at least one middle ring (4) and at least one outer ring (5), the outer ring (5) being arranged in a housing (6), **characterized in that** the bearing arrangement is equipped with at least two sensors (7, 8, 9, 10, 11) for measuring at least two operating parameters (n, T_{I}, T_{M}, F, a) of the bearing arrangement, at least one sensor (7) and/or an exciter element (12) being arranged on the inner ring (3) and/or on a component (13) connected to the inner ring (3), and a detection unit (14) for detecting and forwarding the signals measured by the at least two sensors (7, 8, 9, 10, 11) being arranged on the middle ring (4) or on the outer ring (5).

2. Bearing arrangement according to Claim 1, **characterized in that** the detection unit (14) for detecting and forwarding a signal measured by a sensor (7, 8, 9, 10, 11) comprises a remote transmission unit (15).

3. Bearing arrangement according to Claim 1 or 2, **characterized in that** a sensor (7) for detecting the temperature (T_{I}) is arranged on the inner ring (3) and/or on a component (13) connected to the inner ring (3).

4. Bearing arrangement according to Claim 1 or 2, **characterized in that** an exciter element (12) for detecting the rotational movement is arranged on the inner ring (3) and/or on a component (13) connected to the inner ring (3).

5. Bearing arrangement according to Claim 4, **characterized in that** a sensor (8) for detecting the rotational speed (n) of the inner ring (3) is arranged on the middle ring (4) or on the outer ring (5).

6. Bearing arrangement according to Claim 1 or 2, **characterized in that** a sensor (9) for detecting the temperature (T_{M}) is arranged on the middle ring (4) or on the outer ring (5).

7. Bearing arrangement according to Claim 1 or 2, **characterized in that** a sensor (10) for detecting the bearing loading or bearing forces (F) is arranged on the middle ring (4) or on the outer ring (5), in particular in the main load area of the middle ring (4).

8. Bearing arrangement according to Claim 1 or 2, **characterized in that** a sensor (11) for detecting accelerations (a) is arranged on the middle ring (4) or on the outer ring (5).

9. Bearing arrangement according to one of Claims 1 to 8, **characterized in that** all the sensors (7, 8, 9, 10, 11) are connected to the detection unit (14).

10. Bearing arrangement according to Claim 9, **characterized in that** the connection between at least one sensor (7, 8, 9, 10, 11) and the detection unit (14) is formed as a cable connection or as a wire-free connection.

11. Bearing arrangement according to one of Claims 1 to 10, **characterized in that** the detection unit (14) is equipped with storage means (16) for storing at least one operating parameter (n, T_{I}, T_{M}, F, a) of the bearing arrangement.

12. Method for monitoring a bearing arrangement having at least one three-ring or multi-ring bearing (1), the three-ring or multi-ring bearing (1) having at least one inner ring (3) rotating during intended use, at least one middle ring (4) and at least one outer ring (5), the outer ring (5) being arranged in a housing (6), **characterized in that** the bearing arrangement is equipped with at least two sensors (7, 8, 9, 10, 11) for measuring at least two operating parameters (n, T_{I}, T_{M}, F, a) of the bearing arrangement, the method comprising the steps:
a) measuring the temperature (T_{I}) on the inner ring (3) with a first temperature sensor (7);
b) measuring the temperature (T_{M}) on the middle ring (4) or on the outer ring (5) with a second temperature sensor (9);
c) comparing the two measured temperatures (T_{I}, T_{M}) on the inner ring (3) and middle ring (4) or outer ring (5);
d) outputting a signal if the determined temperature difference (ΔT) exceeds a predefined value.

13. Method according to Claim 12, **characterized in that** the signal is output in a wire-free manner by sending a short message service (SMS) to a mobile telephone and/or to an e-mail receiver.

14. Method according to Claim 12, **characterized in that** the output of a signal is carried out in accordance with step d) from Claim 12 if the determined temperature difference (ΔT) is at least 10 K, preferably at least 15 K.

15. Method according to one of Claims 12 to 14, **characterized in that** the output of a signal in accordance with step d) from Claim 12 triggers and/or influences re-lubrication of the bearing arrangement.

## Revendications

1. Arrangement de palier comprenant au moins un palier à trois bagues ou à bagues multiples (1), le palier à trois bagues ou à bagues multiples (1) présentant au moins une bague intérieure (3) qui tourne lors d'une utilisation conventionnelle, au moins une bague centrale (4) et au moins une bague extérieure (5), la bague extérieure (5) étant disposée dans un boîtier (6), **caractérisé en ce que** l'arrangement de palier est équipé d'au moins deux capteurs (7, 8, 9, 10, 11) pour mesurer au moins deux paramètres de fonctionnement (n, T_{I}, T_{M}, F, a) de l'arrangement de palier, au moins un capteur (7) et/ou un élément excitateur (12) étant disposé sur la bague intérieure (3) et/ou sur un composant (13) relié avec la bague intérieure (3), une unité de détection (14) destinée à détecter et à retransmettre les signaux mesurés par les au moins deux capteurs (7, 8, 9, 10, 11) étant disposée sur la bague centrale (4) ou sur la bague extérieure (5).

2. Arrangement de palier selon la revendication 1, **caractérisé en ce que** l'unité de détection (14) destinée à détecter et à retransmettre un signal mesuré par un capteur (7, 8, 9, 10, 11) comprend une unité de télétransmission (15).

3. Arrangement de palier selon la revendication 1 ou 2, **caractérisé en ce qu'**un capteur (7) destiné à détecter la température (T_{I}) est disposé sur la bague intérieure (3) et/ou sur un composant (13) relié avec la bague intérieure (3).

4. Arrangement de palier selon la revendication 1 ou 2, **caractérisé en ce qu'**un élément excitateur (12) destiné à détecter le mouvement de rotation est disposé sur la bague intérieure (3) et/ou sur un composant (13) relié avec la bague intérieure (3).

5. Arrangement de palier selon la revendication 4, **caractérisé en ce qu'**un capteur (8) destiné à détecter la vitesse de rotation (n) de la bague intérieure (3) est disposé sur la bague centrale (4) ou sur la bague extérieure (5).

6. Arrangement de palier selon la revendication 1 ou 2, **caractérisé en ce qu'**un capteur (9) destiné à détecter la température (T_{M}) est disposé sur la bague centrale (4) ou sur la bague extérieure (5).

7. Arrangement de palier selon la revendication 1 ou 2, **caractérisé en ce qu'**un capteur (10) destiné à détecter la charge du palier ou les forces du palier (F) est disposé sur la bague centrale (4) ou sur la bague extérieure (5), notamment dans la zone de charge principale de la bague centrale (4).

8. Arrangement de palier selon la revendication 1 ou 2, **caractérisé en ce qu'**un capteur (11) destiné à détecter des accélérations (a) est disposé sur la bague centrale (4) ou sur la bague extérieure (5).

9. Arrangement de palier selon l'une des revendications 1 à 8, **caractérisé en ce que** tous les capteurs (7, 8, 9, 10, 11) sont en liaison avec l'unité de détection (14).

10. Arrangement de palier selon la revendication 9, **caractérisé en ce que** la liaison entre au moins un capteur (7, 8, 9, 10, 11) et l'unité de détection (14) est réalisée sous la forme d'une liaison câblée ou d'une liaison sans fil.

11. Arrangement de palier selon l'une des revendications 1 à 10, **caractérisé en ce que** l'unité de détection (14) est équipée de moyens de mémorisation (16) pour mettre en mémoire au moins un paramètre de fonctionnement (n, T_{I}, T_{M}, F, a) de l'arrangement de palier.

12. Procédé pour surveiller un arrangement de palier comprenant au moins un palier à trois bagues ou à bagues multiples (1), le palier à trois bagues ou à bagues multiples (1) présentant au moins une bague intérieure (3) qui tourne lors d'une utilisation conventionnelle, au moins une bague centrale (4) et au moins une bague extérieure (5), la bague extérieure (5) étant disposée dans un boîtier (6), **caractérisé en ce que** l'arrangement de palier est équipé d'au moins deux capteurs (7, 8, 9, 10, 11) pour mesurer au moins deux paramètres de fonctionnement (n, T_{I}, T_{M}, F, a) de l'arrangement de palier, le procédé comprenant les étapes suivantes :
a) mesure de la température (T_{I}) sur la bague intérieure (3) avec un premier capteur de température (7) ;
b) mesure de la température (T_{M}) sur la bague centrale (4) ou sur la bague extérieure (5) avec un deuxième capteur de température (9) ;
c) comparaison des deux températures mesurées (T_{I}, T_{M}) sur la bague intérieure (3) et sur la bague centrale (4) ou sur la bague extérieure (5) ;
d) délivrance d'un signal lorsque la différence de température (ΔT) déterminée devient supérieure à une valeur prédéfinie.

13. Procédé selon la revendication 12, **caractérisé en ce que** la délivrance du signal s'effectue sans fil, en envoyant un SMS (Service de message court) à un téléphone mobile et/ou à un récepteur de courrier électronique.

14. Procédé selon la revendication 12, **caractérisé en ce que** la délivrance d'un signal selon l'étape d) de la revendication 12 a lieu lorsque la différence de température (ΔT) déterminée est au moins égale à 10 K, de préférence au moins égale à 15 K.

15. Procédé selon l'une des revendications 12 à 14, **caractérisé en ce que** la délivrance d'un signal selon l'étape d) de la revendication 12 déclenche et/ou influence un appoint de lubrification de l'arrangement de palier.
